# EUROPEAN PATENT APPLICATION

(11) **EP 1 538 351 A1**
(43) Date of publication of application: **08.06.2005**
(21) Application number: 04257541.5
(22) Date of filing: 03.12.2004
(51) Int. Cl.: F16B 39/10, B60B 3/16

(54) **Wheel nut locking assembly**

(30) Priority: 03.12.2003 GB 0327952
(71) Applicant: Massie, Charles Robert, Conway N. Wales, LL29 9HD (GB)
(72) Inventor: Massie, Charles Robert, Conway N. Wales, LL29 9HD (GB)
(74) Representative: W.P. Thompson & Co.

(57) **Abstract**

A vehicle wheel nut locking assembly for preventing loosening of wheel nuts that are fitted to respective studs carried by a wheel hub on which a vehicle wheel is mounted, comprising two anchor members (10), each having two apertures (18), the spacing of which corresponds to that of adjacent wheel studs so that the anchor members can be fitted over the studs beneath the associated wheel nuts, a generally annular securing component (12) having a plurality of apertures corresponding in number and spacing to the wheel studs, a plurality of locking caps (14), each of which is coupled, or adapted to be coupled, to an aperture (52) of the component (12) so that the locking caps are captured axially within the respective apertures but capable of angular displacement therewithin, and a fixing means for releasably coupling the securing component (12) to the anchor members (10).

## Description

The invention is concerned with wheel nut locking assemblies for preventing the loosening of wheel nuts which secure road wheels to vehicles.

Wheel nuts loosen in use of the vehicle to which they are fitted due to a number of causes, including human errors and wheel rim flexing.

It is known for wheel nuts to loosen to an extent that the wheel becomes detached during the motion of the vehicle. Such incidents are dangerous for those inside the vehicle and other road users.

Frequent checks on the state of the wheel nuts are therefore necessary. Checks are time-consuming and can be overlooked. Therefore there is a need for devices which enable the wheel nuts to be locked in their operational positions.

Various forms of wheel locking assemblies are known already in the art. For example, GB Patent Specification No. 2351134A discloses a wheel nut locking assembly which comprises an annular base plate which contains a plurality of circumferentially spaced holes corresponding in number and spacing to the threaded studs carried by the wheel hub on which a wheel is to be mounted with the wheel in position on the studs. The base plate is presented to the wheel so that each of its apertures receives a respective one of the threaded studs. The conventional wheel nuts are then applied and screwed up tight, thereby clamping the base plate rigidly to the wheel. The base plate member has an upstanding peripheral rim which projects away from the wheel, parallel to the axes of the studs. For each wheel nut, there is provided a collar device formed with angled surfaces to fit non-rotatably over the wheel nut. The collars possess a laterally projecting portion which is arranged for engagement with the upstanding rim of the base plate in the event of any significant rotation of the nut occurring. The assembly also includes an outer, cover member which is attached to the base member by relative rotation therebetween to prevent access to an enclosed portion of the assembly. The outer member has a snap fit coupling with the base member and spring loaded locking pins which become inserted into the holes in the base member to retain a locked condition. The removal of the apparatus is therefore rather complex.

It is an object of the present invention to provide a simplified assembly for the prevention of loosening of wheel nuts.

According to the present invention there is provided a vehicle wheel nut locking assembly for preventing loosening of wheel nuts that are fitted to respective studs carried by a wheel hub on which a vehicle wheel is mounted;
the locking assembly comprising:
at least one anchor member having at least two first apertures, the spacing of the two apertures corresponding to that of adjacent wheel studs so that the anchor member can be fitted over said studs beneath the associated wheel nuts;
a generally annular securing component having a plurality of apertures corresponding in number and spacing to the wheel studs;
a plurality of locking caps, each locking cap being coupled, or adapted to be coupled, to an aperture of the generally annular securing component so that the locking caps are captured axially within the respective apertures but capable of angular displacement therewithin; and
a fixing means for releasably coupling the generally annular securing component to the at least one anchor member.

Preferably, the anchor member is of generally arcuate configuration.

Advantageously, the arcuate anchor member comprises a flat plate containing said first two apertures.

Preferably, the arcuate anchor plate comprises a further aperture for receiving one end of a fixing pin, by which the generally annular securing compartment can be releasably coupled to said anchor member.

In some embodiments, said further aperture in the anchor member is generally rectangular and said one end of the fixing pin carries a rectangular T-bar which can be received through said generally rectangular further aperture and rotated through 90° to couple together the securing component and the anchor member.

In other embodiments, said further aperture in the anchor member is defined by a hollow cylindrical ferrule carried by the anchor member and having an internal thread for receiving a corresponding external thread of said fixing pin, which said pin being adapted to extend through the annular securing component.

The locking caps preferably have a tubular body whose inner periphery is toothed for establishing engagement with a respective wheel nut such that there is substantially no relative rotation therebetween.

In one preferred embodiment, the tubular body of the locking cap has diametrically opposed, radially outwardly extending wing portions at one end whose engagement with the generally annular securing component restricts the range of possible angular displacement of the locking caps within said first apertures of the securing component.

Advantageously, the generally annular securing component comprises a plurality of straight sections interconnected by boss portions defining said first apertures.

Preferably, said straight portions are of channel section having a base and two side walls, the range of possible angular displacement of the locking caps within said first apertures of the securing component being held by engagement of said radially extending wing portions of the locking caps with said side walls of such channel section.

If it is desired, to minimise the number of components, a plurality of said anchor members can be joined together to form a second generally annular member.

A specific embodiment of the present invention will now be described, by way of example only, with reference to the accompanying drawings, in which:-
Fig. 1 is a perspective view which shows a wheel hub, wheel nuts, wheel studs and two component parts of a wheel nut locking assembly in accordance with the present invention;
Fig. 2 is a perspective view similar to Fig. 1 but showing also an annular securing component of the assembly;
Figs. 3 a, 3b and 3c show parts of the annular securing component from different perspectives;
Fig 4a is a partial sectional view showing a locking cap rotatably mounted within an aperture in the annular securing component;
Fig. 4b is a partial sectional view at 90° to the view of Fig. 4a;
Fig. 4c is an underside view of the locking cap of Figs 4a and 4b disposed rotatably within the aperture in the annular securing member;
Fig. 5 is a plan view from below of an arcuate anchor component;
Fig. 6 is a sectional side view of the anchor component of Fig. 5;
Fig. 7 is a sectional side view of the anchor component of Fig. 5 showing part of the annular securing member and a fixing pin;
Fig. 8 is a second side view on line VIII-VIII in Fig. 7;
Fig. 9 is a side elevation of a fixing pin;
Fig. 10 is a plan view of the fixing pin from one end;
Fig. 11 is a plan view of the fixing pin from the other end;
Fig. 12 is a front elevation of the fixing pin of Fig. 9; and
Fig. 13 is a diagrammatic perspective view illustrating a modified fixing pin arrangement.

Referring to the drawings, the illustrated embodiment of the present wheel nut locking assembly comprises two generally arcuate anchor components 10, a generally annular securing component 12, carrying a plurality of angularly displaceable locking caps 14, and two fixing pins 16.

Each arcuate component 10 comprises a flat piece of metal of generally arcuate configuration having two circular apertures 18, which are spaced apart laterally by a distance corresponding to the circumferential spacing of the threaded studs 20 on the wheel hub 21 of a vehicle, to which a vehicle road wheel (not shown) is to be mounted.

In the present case, the wheel hub carries ten studs and two arcuate components are used. However, in other embodiments, different number of studs (e.g. 8 or 12) may be used. The apertures 18 are dimensioned so that they just fit over the studs 20.

Between the two apertures 18 of each arcuate member 10 there is disposed a raised hollow circular platform 22. The platform contains a slot 24 which is substantially rectangular in shape but with two arcuate indents 23 facing one another in the middle of the two longer sides of the slot 24. The underside of the platform 22 is formed with two pairs of dimples 25 disposed as shown in Fig. 5 for defining a locking position of the fixing pins 16 as described hereinafter.

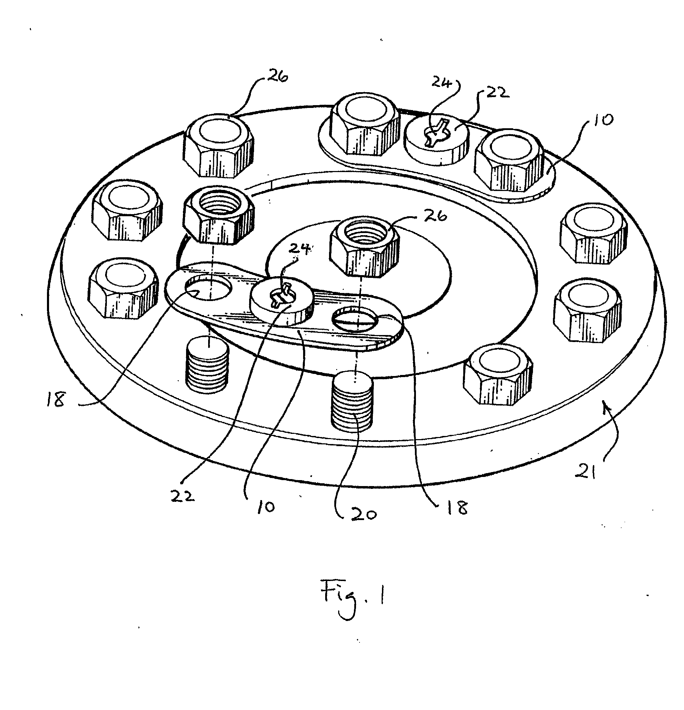

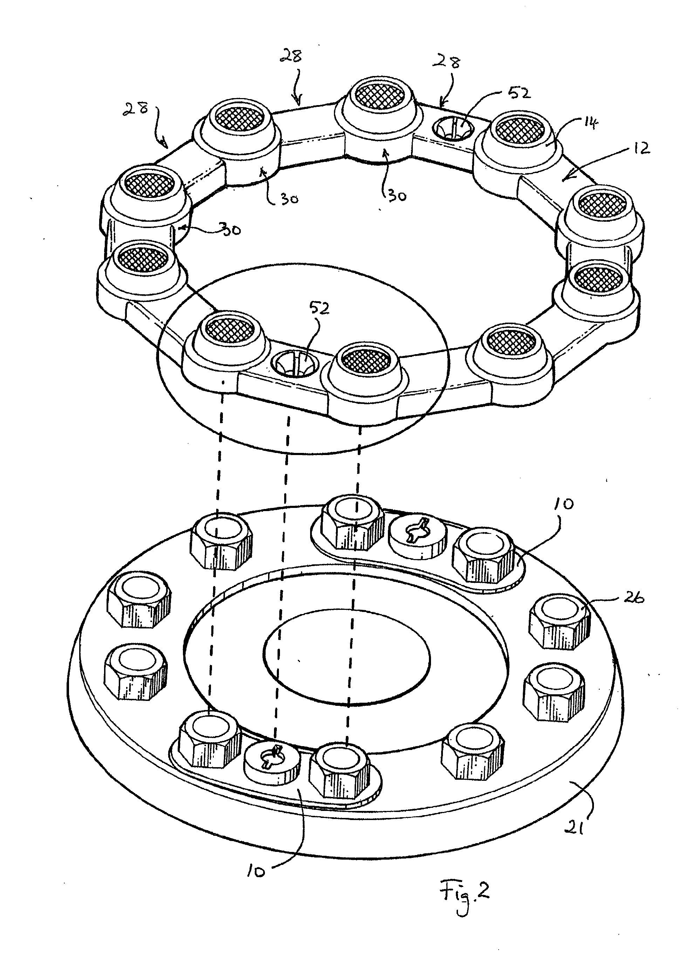

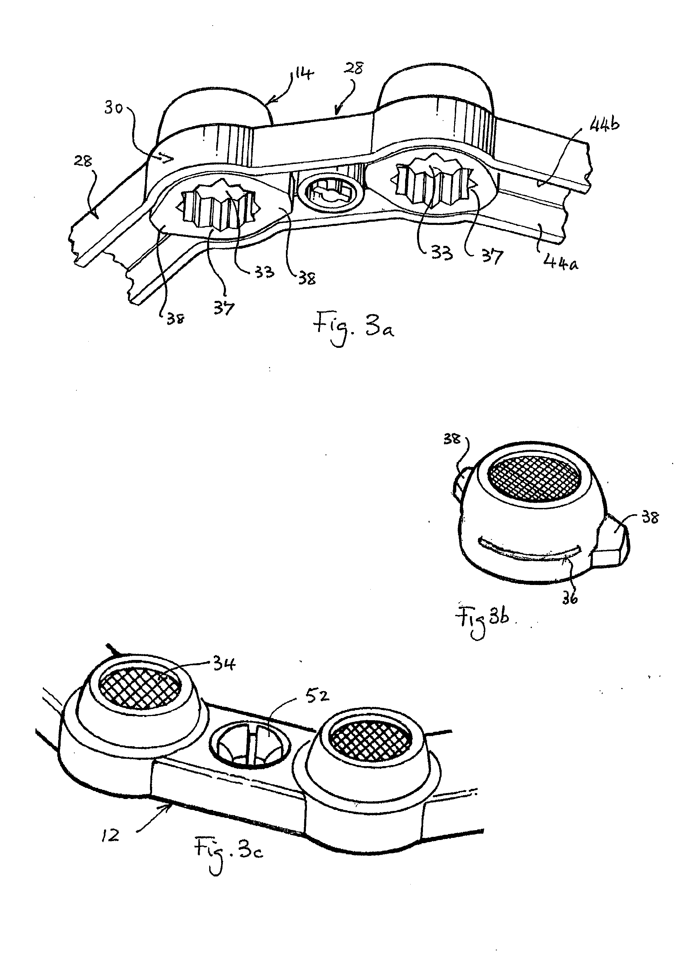

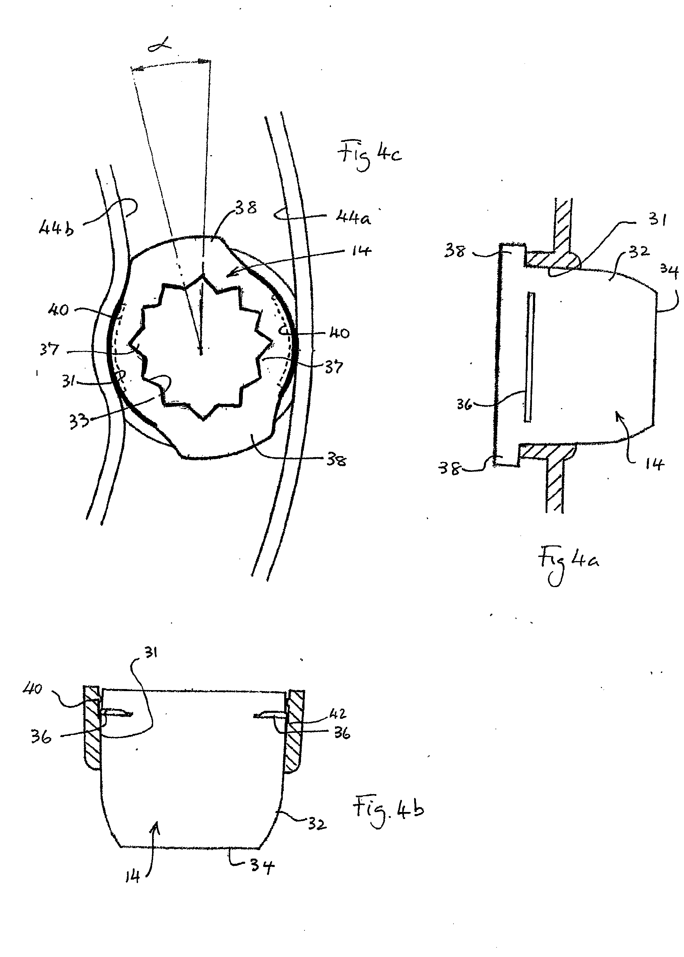

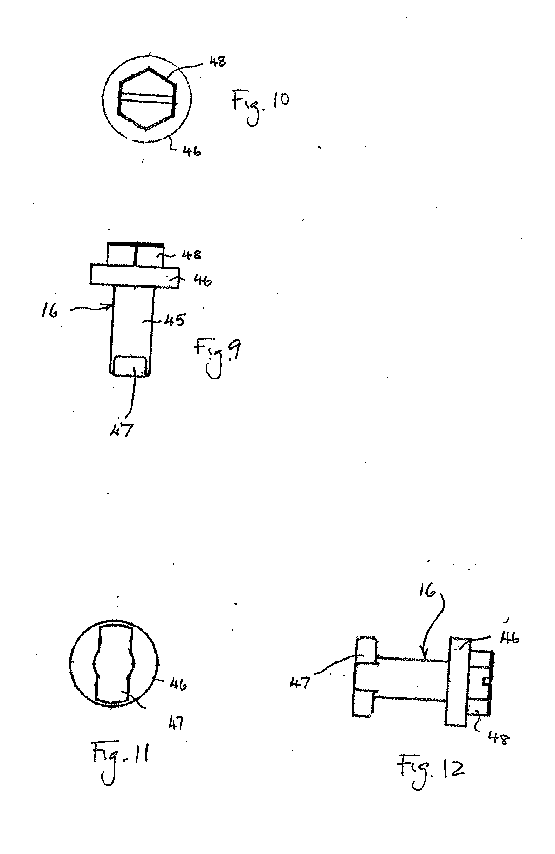

In use, when the wheel (not shown) has been applied over the studs, and the two arcuate members 10 have been mounted over opposed pairs of the studs as shown in Fig. 1 and 2 (outboard of the vehicle wheel), the conventional wheel nuts 26 are applied to the studs 20, thereby clamping the wheel to the hub 21 and the arcuate members 10 to the wheel. This is the condition shown in the lower part of Fig. 2, except that the wheel is not shown in order to assist the illustration of the operational components of the assembly

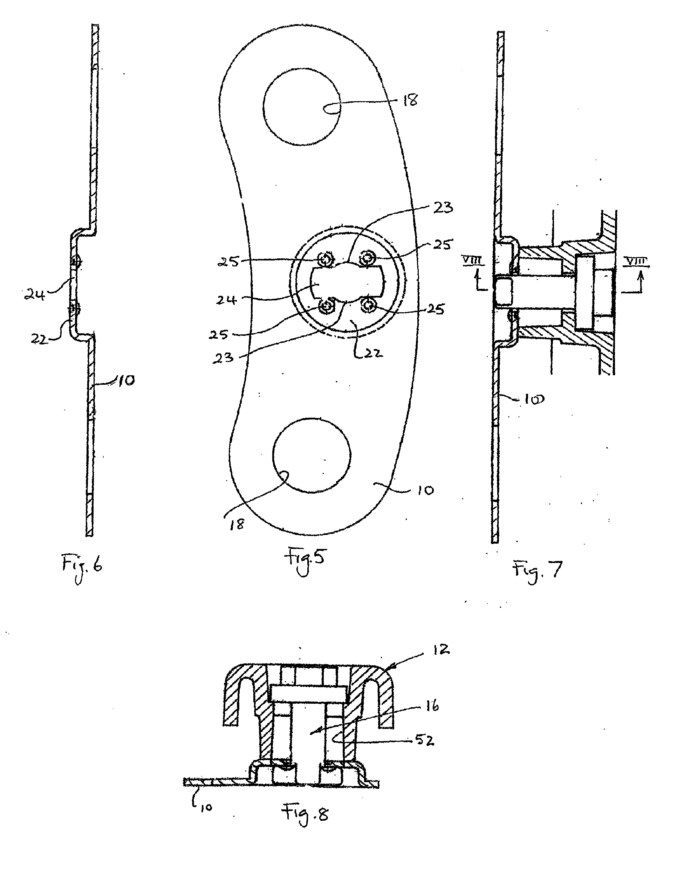

The generally annular component 12 comprises ten straight channel-sectioned portions 28 (see Fig 3a) which are interconnected by ten generally circular boss portions 30, each of which defines a circular aperture 31 (see Fig. 4a). Rotatably received within each of the apertures 31 is a respective one of the locking caps 14.

As best seen in Figs. 4a and 4b, each locking cap 14 has a generally tubular body 32 which is arcuately tapered and closed at one end (right hand end as viewed in Fig. 4a) by a flat top portion 34 and open at the opposite end. The inner surface 33 of each tubular body 32 has a plurality of axial triangular ribs 37 which together define the shape of a twelve pointed star such as to be capable of being fitted snugly over a six-sided wheel nut. The external cylindrical surface of the tubular body 32 of each locking cap 14 has a pair of low, arcuate ridge portions 36 which project radially outwardly from opposite regions of the body 32. Typically, each ridge portion 36 extends through about 60° around the circumference of the body 32. In the opposed regions between the ridge portions 36, each body 32 carries respective, generally triangular, radially projecting wing portions 38 which extend to the axial end of the body 32.

The walls of the circular apertures 31 of the boss portions 30 each carry a pair of arcuate ribs 40 and an annular shoulder 42 which are spaced apart axially so as to define an annular space therebetween which receives the arcuate ridge portions 36 of the respective locking cap 14 whereby the locking caps can rotate within the apertures 31 relative to the boss portions 30 whilst, once inserted, being prevented from being separated from the apertures 31 and hence from the boss portions. Thus, during assembly, the cylindrical bodies are pushed into the apertures in the boss portions 30 (downwards in Fig. 4b) so that the ridge portions click into position between the shoulder portions 42 and arcuate rib portions 40 defined in the side walls of the apertures 31. As best seen in Fig. 4c, rotation of the locking caps is limited in this embodiment to an angle of about 16° by the engagement of the radially projecting wing p ortions 3 8 w ith the lateral s ides 44a, 4 4b of the channel shaped straight portions 28 of the annular securing component 12.

The fixing pin 16 is shown in Figs. 9 to 12 and comprises a cylindrical stem 45 having at one end a T-bar portion 47 and at the other end a circular flange 46 and screw head 48. The T-bar portion 47 is generally rectangular and of dimensions to just pass through the slot 24 of the anchor components 10. As best seen in Fig. 8, each fixing pin 16 is carried loosely and rotatably within a respective aperture 52 of the annular securing component 12.

In use, the wheel is first applied over the studs and several nuts 50 applied loosely to studs which are not going to be associated with the anchor components 10. The two anchor components are then applied over pairs of adjacent studs, preferably at diametrically opposite positions on the hub as shown in Figs 1 and 2. Nuts 50 are then applied over the latter studs 20 and all wheel nuts 50 are tightened fully. The annular securing member 12 is then presented to the ten wheel nuts and while holding the member 12 by hand, the individual locking caps are manually rotated so as to line up the ribs 37 of the inner surface of the locking caps with the apices of the nuts whereby, when all have been so aligned, the annular securing component can be axially pushed over the nuts so that the nuts are substantially fully embraced by the respective locking caps. Because of the structure as described above, the angular displacement of any one of the locking caps needed to arri ve at an aligned position with the associated nut is only ever a few degrees.

As an alternative, the first time the assembly is fitted, the locking caps can be applied over the nuts 50 before being fitted to the annular securing component, the latter component being pushed over the locking caps until the arcuate ribs 40 pass over the ridge portions 36 and the locking caps click into their operational positions.

Once the annular securing component has been fully applied as described above it can be locked in place by rotating the fixing pins, for example by a screw-driver, so that the rectangular T-bar heads of the fixing pins 16 pass through the rectangular slots 24 in the anchor components (Fig. 7) and then further rotating the fixing pins by 90° so that they pass over the dimples 25 to adopt a central position therebetween (Fig. 8).

In this condition, the nuts 50 can unwind only by the angular displacement necessary to bring the wing portions 38 into engagement with the side walls 44a, 44b of the securing component 12, at most a few degrees. Thus, there is no possibility of the nuts being loosened sufficiently to cause any significant loosening of the wheel.

The flat top portions 34 of the locking caps can be provided if desired with reflecting surfaces.

In other embodiments, different means of mounting the locking caps in the apertures in the annular securing component can be used, it being sufficient that they be provided a means of enabling some angular displacement therebetween.

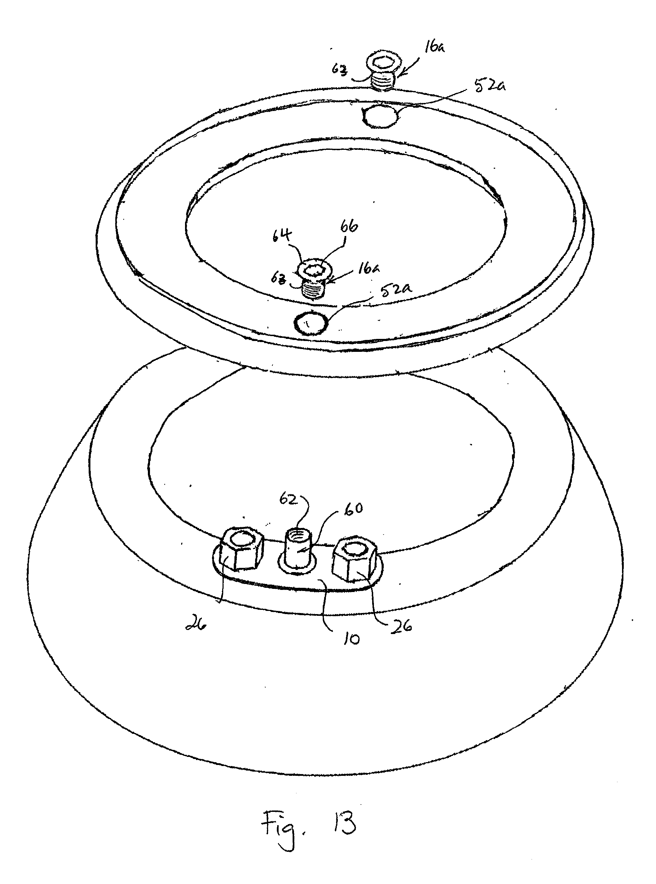

In many circumstances, it may be preferred to use a modified fixing arrangement as illustrated diagrammatically in Fig. 13.

In this case, in place of the raised circular platform 22, there is mounted on each arcuate component 10, for example by welding, a hollow cylindrical member, such as a ferrule 60. Preferably, each ferrule 60 has an internal thread 62 (although in principle it could be externally threaded). The pin 16 having the T-bar portion is replaced by a simpler pin 16a having an external thread 63 (or internal thread if the ferrule 60 is externally threaded) which extends through a simple aperture 52a in the annular securing component 12 (here shown as a simple ring to simplify the description but which would in practice have a structure essentially as shown in Figure 2 except for the nature of the aperture 52). The screw threaded pins 16a have tapered heads 64 and blind keyways 66 for receiving a suitable tool, such as an Allen key or screw-driver. The ferrules 60 and pins 16a are preferably of metal to add mechanical strength to the fixing arrangement. The holes 52a are preferably countersunk so that the pin heads 64 lie flush with the top surface of the annular component 12, when fitted.

The annular securing component 12, including the locking caps 14, can be made of any suitable material, including plastics and metal. The arcuate anchor components could be of a plastics material but are preferably of metal. Again, the fixing p ins c an be of metal or plastics, but are preferably of metal for strength purposes.

## Claims

1. A vehicle wheel nut locking assembly for preventing loosening of wheel nuts that are fitted to respective studs (20) carried by a wheel hub (21) on which a vehicle wheel is mounted;
the locking assembly comprising:
at least one anchor member (10) having at least two first apertures (18), the spacing of the two apertures (18) corresponding to that of adjacent wheel studs (20) so that the anchor member (10) can be fitted over said studs (20) beneath the associated wheel nuts (26);
a generally annular securing component (12) having a plurality of apertures corresponding in number and spacing to the wheel studs (20);
a plurality of locking caps (14), each locking cap being coupled, or adapted to be coupled, to an aperture (31) of the generally annular securing component (12) so that the locking caps (14) are captured axially within the respective apertures (31) but capable of angular displacement therewithin; and
a fixing means (16; 16a) for releasably coupling the generally annular securing component (12) to the at least one anchor member (10).

2. An assembly as claimed in claim 1, wherein the anchor member (10) is of generally arcuate configuration.

3. An assembly as claimed in claim 2, wherein the arcuate anchor member (10) comprises a flat plate containing said two first apertures (18).

4. An assembly as claimed in claim 3, wherein the arcuate anchor member (10) comprises a further aperture (24) for receiving one end of a fixing pin (16), by which the generally annular securing component (12) can be releasably coupled to said anchor member (10).

5. An assembly as claimed in claim 4, wherein said further aperture (24) in the anchor member is generally rectangular and said one end of the fixing pin (16) carries a rectangular T-bar (47) which can be received through said generally rectangular further aperture (24) and rotated t hrough 90° to couple together the securing component and the anchor member.

6. An assembly as claimed in claim 4, wherein said further aperture in the anchor member is defined by a hollow cylindrical member (60) carried by the anchor member (10) and having an internal thread (62) for receiving a corresponding external thread (63) of said fixing pin (16a), said pin (16a) being adapted to extend through the annular securing component (12).

7. An assembly as claimed in any of claims 1 to 6, wherein the locking caps (14) have a tubular body (32) whose inner periphery is toothed for establishing engagement with a respective wheel nut such that there is substantially no relative rotation therebetween.

8. An assembly as claimed in claim 7, wherein the tubular body (32) of the locking cap has diametrically opposed, radially outwardly extending wing portions (38) at one end whose engagement with the generally annular securing component (12) restricts the range of possible angular displacement of the locking caps (14) within said first apertures of the securing component.

9. An assembly as claimed in claim 8, wherein the generally annular securing component (12) comprises a plurality of straight portions (28) interconnected by boss portions (30) defining said first apertures.

10. An assembly as claimed in claim 9, wherein said straight portions (28) are of channel section having a base and two side walls, the range of possible angular displacement of the locking caps within said first apertures of the securing component being held by engagement of said radially extending wing portions of the locking caps with said side walls of such channel section.

11. An assembly as claimed in any of the preceding claims, wherein a plurality of said anchor members (10) are joined together to form a second generally annular member.
